# FASCICULE DE BREVET EUROPEEN

(11) **EP 3 815 762 B1**
(45) Date de publication et mention de la délivrance du brevet: **04.12.2024**
(21) Numéro de dépôt: 20204703.1
(22) Date de dépôt: 29.10.2020
(51) Int. Cl.: C22C 1/04, C22B 11/00, B01D 11/02, B22F 9/00, H01M 8/008

(54) **PROCÉDÉ DE RÉCUPÉRATION DE PARTICULES DE PLATINOÏDE CONTENUES DANS UN SUPPORT ÉLECTRIQUEMENT ISOLANT**
VERFAHREN ZUR RÜCKGEWINNUNG VON PLATINOIDTEILCHEN, DIE IN EINEM ELEKTRISCH ISOLIERENDEN TRÄGERELEMENT ENTHALTEN SIND
METHOD FOR RECOVERING PLATINOID PARTICLES CONTAINED IN AN ELECTRICALLY INSULATING SUPPORT

(30) Priorité: 31.10.2019 FR 1912263
(43) Date de publication de la demande: 05.05.2021
(73) Titulaire: Commissariat à l'Energie Atomique et aux Energies Alternatives, 75015 Paris (FR); Centre National de la Recherche Scientifique, 75794 Paris Cedex 16 (FR); CPE Lyon FCR, 69100 Villeurbanne (FR); UNIVERSITE CLAUDE BERNARD - LYON 1, 69622 Villeurbanne Cédex (FR)
(72) Inventeur: BILLY, Emmanuel, 38054 GRENOBLE CEDEX 09 (FR); COUDRAY, Mathias, 38054 GRENOBLE CEDEX 09 (FR); DUFAUD, Véronique, 69100 VILLEURBANNE (FR); HAUMESSER, Paul-Henri, 38054 GRENOBLE CEDEX 09 (FR); MENDIL, Hakima, 38054 GRENOBLE CEDEX 09 (FR); SANTINI, Catherine, 69660 COLLONGES AU MONT D'OR (FR)
(74) Mandataire: Brevalex

(56) Documents cités:
- EP-A1- 3 178 576
- EP-A1- 3 263 744
- EP-B1- 3 263 744
- FR-A1- 3 062 135
- US-A1- 2010 206 134
- MOCHAMAD L FIRMANSYAH ET AL: "Selective Recovery of Platinum Group Metals from Spent Automotive Catalysts by Leaching and Solvent Extraction", JOURNAL OF CHEMICAL ENGINEERING OF JAPAN., vol. 52, no. 11, 20 November 2019 (2019-11-20), JP, pages 835 - 842, XP055706430, ISSN: 0021-9592, DOI: 10.1252/jcej.19we093

## Description

### DOMAINE TECHNIQUE

La présente invention se rapporte à un procédé de récupération de particules de platine ou d'un autre platinoïde contenues dans un matériau électriquement isolant, par exemple une membrane de piles à combustible.

La présente invention trouve, notamment, une application dans le recyclage de piles à combustibles arrivées en fin de vie, en particulier de piles à combustible à membrane échangeuse de protons, en vue de valoriser le platine présent dans ces dernières. L'invention est également particulièrement intéressante dans le domaine de la catalyse chimique hétérogène.

### ÉTAT DE LA TECHNIQUE ANTÉRIEURE

Les piles à combustible à membrane échangeuse de protons (ou PEMFC pour « Proton Exchange Membrane Fuel Cells ») transforment de l'énergie chimique en énergie électrique à partir des demi-équations suivantes :

H₂ → 2H⁺ + 2e⁻

4H⁺ + 4e⁻ + O₂ → 2H₂O

Les piles du type PEMFC sont constituées par un empilement de cellules électrochimiques élémentaires qui sont séparées, les unes des autres, par des plaques bipolaires. Ces cellules électrochimiques élémentaires, également appelées assemblages membrane électrodes et abrégées AME, sont formées d'une membrane disposée entre deux électrodes, cette membrane est électriquement isolante et ioniquement conductrice. Les électrodes de ces AME comprennent un catalyseur, généralement à base de métaux nobles tels que le platine, permettant de catalyser la réaction d'oxydation du dihydrogène.

Si l'on considère l'ensemble des composants formant une pile à combustible du type PEMFC, le coût du platine représente à lui seul 25 % du coût global d'une telle pile.

Aussi, et pour que le coût du platine ne constitue pas un frein au développement de la technologie des piles du type PEMFC, il y a un fort intérêt à mettre en place un procédé efficace et économiquement viable pour récupérer les métaux nobles et/ou les platinoïdes, notamment, le platine contenu dans les AME des piles à combustible en fin de vie et/ou les rebuts de production.

A l'heure actuelle, seuls les procédés pyrométallurgiques et hydrométallurgiques sont utilisés à l'échelle industrielle pour récupérer les métaux nobles dans les piles à combustibles.

La récupération du platine par la voie pyrométallurgique consiste à porter à très haute température (typiquement à une température allant de 1400°C à 1700°C), dans un four à arc plasma, un mélange comprenant les différents composants (dont les catalyseurs) préalablement broyés, et un fondant (CaO ou MgO).

Les procédés pyrométallurgiques sont efficaces pour récupérer le platine, mais ils présentent l'inconvénient de consommer beaucoup d'énergie et de conduire au dégagement de quantités importantes de gaz qui sont nocifs pour l'homme et l'environnement. En particulier, ces procédés pyrométallurgiques peuvent conduire à la formation de dioxyde de carbone (CO₂) et de gaz toxiques. Parmi ces gaz toxiques, on peut citer le dioxyde de soufre (SO₂) ou encore le fluorure d'hydrogène (HF). Ces deux gaz proviennent de la combustion de la membrane de l'AME, lorsque celle-ci est réalisée en un polymère perfluorocarboné comprenant des groupements sulfonés. De surcroît, les procédés pyrométallurgiques ne permettent pas de valoriser les autres composants qui constituent les AME.

La récupération du platine par la voie hydrométallurgique consiste à mettre en contact l'assemblage membrane électrode, préalablement broyé, avec une solution apte à dissoudre le platine. La solution qui est reconnue, à ce jour, comme étant la plus efficace pour dissoudre le platine est l'eau régale, qui est formée par un mélange concentré d'acide chlorhydrique et d'acide nitrique dans un rapport 1/3. Ce procédé permet de récupérer, en plus du platine, d'autres composants constitutifs des AME et, notamment, les membranes, le graphite ou les électrodes de carbone. Cependant, les procédés hydrométallurgiques présentent des risques importants liés à la mise en oeuvre de mélanges d'acides concentrés, à cause notamment de dégagement de NOx, et aux traitements ultérieurs des effluents aqueux, ce qui, en plus, engendre des surcoûts en termes de sécurité industrielle qui peuvent mettre en péril l'équilibre économique de tels procédés.

Pour remédier aux inconvénients des procédés pyrométallurgiques et hydrométallurgiques qui viennent d'être cités, il a été récemment proposé de nouveaux procédés de récupération de platine.

Par exemple, le document US 2009/0049954 A1 propose un procédé dans lequel l'AME est refroidie à -75°C puis pulvérisée sous la forme d'une poudre. La pâte obtenue est ensuite soumise à une étape de lixiviation, à 200°C, en milieu acide, par exemple dans de l'eau régale ou de l'acide chlorhydrique concentré avec du peroxyde d'hydrogène. Le platine contenu dans le lixiviat est récupéré par dépôt électrolytique et/ou par réduction chimique. Ce procédé nécessite non seulement une étape de cryogénie, qui rend le procédé compliqué à industrialiser, mais aussi des solutions acides concentrées à température élevée, ce qui nécessite des précautions particulières pour le traitement des effluents.

Dans le document US 2008/0064771 A1, une membrane revêtue de catalyseur (« catalyst coated membrane ») est soumise à un traitement en eau supercritique à 382°C et 240 bars pendant 7h. A l'issue du traitement, une solution verdâtre comprenant un sédiment noir (composé de carbone et de platine) est obtenue. La partie fluorée (membrane et ionomère dispersé dans la couche catalytique) est séparée du résidu solide par filtration. Ce procédé nécessite d'autres étapes additionnelles pour pouvoir séparer le platine du carbone et le purifier.

Une autre solution consiste à mettre les particules de platine en solution avec une solution alcoolique. Par exemple, le document US 2007/0292745 A1 décrit un procédé de recyclage d'assemblage de membrane/électrodes de piles à combustibles PEMFC. L'AME est mise en contact avec un alcool ayant une chaîne alkyle allant de C1 à C8, ce qui conduit à la séparation de la membrane des couches anodique et cathodique. La dispersion du film ionomère a lieu en chauffant le solvant à une température allant, par exemple, de 50°C à 180°C. Les particules de ionomère sont ensuite séparées des particules de platine, par exemple en filtrant la solution, puis en, réalisant, sur le filtrat, une combustion du carbone ou par dissolution en milieu acide, éventuellement, en température et pression.

Dans le document WO 2016/156815 A1, l'AME est plongée dans une solution comprenant un diol aliphatique C₁₋₈ comprenant au moins un groupe CH₂OH, comme de l'éthylène glycol. La solution peut être chauffée jusqu'à une température de 230°C. Une étape ultérieure de filtration ou de centrifugation permet de séparer le solvant et les ionomères des composants catalytiques.

Cependant, ces différents procédés nécessitent l'utilisation d'alcools qui sont inflammables et volatiles, en présence de nanoparticules de platine, dans les conditions de traitement mentionnées (température >100°C). Ces solutions génèrent donc des risques d'inflammabilité. La mise en oeuvre de ces procédés à température élevée augmente les risques d'explosion et donc nécessite des précautions particulières, ce qui représente un surcoût économique. De plus, ces procédés sont énergivores puisqu'ils mettent en jeu de fortes pression et température et/ou une étape de combustion.

Dans le document EP 3 263 744 A1, le procédé de recyclage d'assemblage de membrane/électrodes issu de piles à combustibles PEMFC met en oeuvre une étape d'électrolyse. Pour cela, la couche catalytique Pt/C avec le ionomère est plongée dans une solution électrolytique formée d'un mélange de liquides ioniques. L'extraction du platine est réalisée par électro-dissolution du platine, et la récupération du platine dissous par électrodéposition sur une contre-électrode. Ce type de procédé impose la mise en place de l'électrode de l'AME sur un conducteur électrique, ce qui complique le procédé et augment ses coûts. Dans un tel procédé, les conditions pour l'électrodéposition sont sensibles aux fluctuations de concentration, et les conditions de traitement génèrent inévitablement la dégradation des liquides ioniques durant l'électrolyse. Il est donc nécessaire de traiter/changer la solution de liquide ionique régulièrement. De plus, cette solution n'est applicable que pour un support électriquement conducteur. Or, dans le cas des AME où la membrane est revêtue de catalyseur (CCM pour « Catalyst Coated Membrane »), la couche active est déposée directement sur la membrane, une quantité importante de nanoparticules est donc supportée par la membrane polymère qui est électriquement isolante. Ce procédé ne peut donc pas être utilisé pour de tels matériaux. Le document US 2010/206134 fournit un exemple d'utilisation de liquides ioniques pour récupérer les métaux d'un support catalytique.

### EXPOSÉ DE L'INVENTION

Un but de la présente invention est de proposer un procédé de recyclage remédiant aux inconvénients de l'art antérieur et, en particulier, de proposer un procédé permettant d'extraire directement des nanoparticules contenues dans un support électriquement isolant tout en évitant les problématiques liées aux solvants (inflammabilité notamment) et/ou à leur dégradation dans le temps.

Pour cela, la présente invention propose un procédé de récupération de particules de platinoïde contenues dans un support électriquement isolant, le procédé comprenant une étape d'extraction au cours de laquelle le support électriquement isolant est plongé dans une solution liquide ionique comprenant un premier liquide ionique, de manière à extraire les particules de platinoïde du support électriquement isolant.

Par particules de platinoïde, on entend des particules en un élément du groupe MGP (ou PGM pour « Platinum Group Metals »), c'est-à-dire un élément pouvant être choisi parmi le platine, le palladium, le rhodium, le ruthénium, l'iridium, l'osmium, le rhénium ou un de leurs alliages.

L'invention se distingue fondamentalement de l'art antérieur par la séparation des nanoparticules de platinoïde du support électriquement isolant dans une solution liquide ionique.

L'anion du premier liquide ionique est choisi parmi les halogénures, les amines, les dicyanamides et les anions possédant un ligand soufré comme les thiocyanates. Ces anions ont un effet stabilisant sur les particules de platinoïdes et favorisent leur dispersion en solution.

Le cation du premier liquide ionique est choisi parmi les imidazolium, pyrrolidinium, ammonium, pipéridinium, sulfonium et phosphonium. Ces anions favorisent le gonflement des matériaux polymères, notamment des ionomères, contenant les particules de platinoïdes et donc l'extraction de ces dernières.

Le procédé est dépourvu d'étapes électrochimiques (i.e. il n'y a ni électrodissolution ni électrodéposition). L'invention peut être utilisée pour de nombreux substrats électriquement isolants. La solution liquide ionique permet d'extraire les particules de leur support par simple immersion du support. En plus de pouvoir récupérer les particules directement sous forme métallique, le support, exempt des particules, peut être recyclé.

Avantageusement, le support électriquement isolant est en un matériau polymère.

Avantageusement, le support électriquement isolant est une membrane échangeuse de protons.

Avantageusement, les particules sont des nanoparticules ayant une plus grande dimension inférieure à 1µm.

Avantageusement, l'étape d'extraction des particules de platinoïde est réalisée sous agitation.

Avantageusement, l'étape d'extraction est réalisée à une température allant de 20°C à 180°C, de préférence de 60 à 150°C, par exemple de 80°C.

Avantageusement, la durée de l'étape d'extraction va de 2 minutes à 2 jours, de préférence de 2h à 18h, par exemple 6h.

Avantageusement, la solution liquide ionique comprend un deuxième liquide ionique.

Avantageusement, la solution liquide ionique comprend de 55% à 100% molaire du premier liquide ionique et de 0% à 45% du deuxième liquide ionique.

Le procédé présente de nombreux avantages :
- éviter les traitements à haute température et/ou à haute pression,
- optimiser les conditions de sécurité industrielle et de sécurité environnementale car le procédé ne génère pas de gaz toxique, comme les NOx, et n'utilise pas d'acide fortement concentré (eau régale ou mélange pirhana),
- ne pas utiliser de solvant organique dangereux pour l'homme et l'environnement,
- limiter les risques d'inflammabilité et d'explosion,
- valoriser à la fois les nanoparticules et le support,
- ne pas nécessiter de dissoudre puis de réduire le platinoïde,
- être économique puisque la solution liquide ionique n'est pas dégradée et peut être réutilisée,
- être facile à mettre en oeuvre, pour tout type de support.

L'invention concerne également un procédé de récupération de particules de platinoïdes contenues dans des assemblages membrane électrodes d'une pile à combustible, telle qu'une pile à combustible à membrane échangeuse de protons PEMFC, de préférence usée ou mise au rebut, ce procédé comprenant les étapes successives suivantes :
(a) une étape de séparation des assemblages membrane électrodes et des plaques bipolaires de la pile à combustible,
(b) une étape de séparation de la membrane et des électrodes de chaque assemblage membrane électrodes séparé à l'étape (a), et
(c) une étape de récupération des particules de platinoïdes contenues dans la membrane par la mise en oeuvre du procédé de récupération précédemment décrit.

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
La figure 1 représente, de manière schématique, et en coupe un assemblage membrane électrode selon un mode de réalisation particulier de l'invention,
La figure 2 est un cliché obtenu par microscopie électronique à transmission de la poudre catalytique utilisée pour la fabrication d'une électrode, selon un mode de réalisation particulier de l'invention,

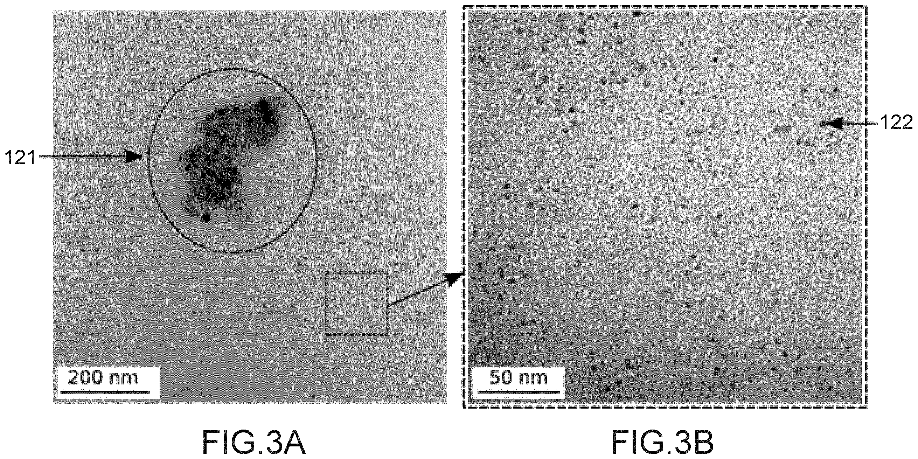

Les figures 3A et 3B sont des clichés obtenus par microscopie électronique à transmission, à différentes échelles, de la solution liquide ionique à l'issue du procédé d'extraction, selon un mode de réalisation particulier de l'invention.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

Par la suite, même si la description fait référence une membrane d'une pile à combustible, et notamment à une membrane d'une pile à combustible basse température (PEMFC, DMFC), l'invention est transposable à toute autre membrane, et, d'une manière plus générale à tout autre support électriquement isolant supportant des particules métalliques, et en particulier des particules de type platinoïde (i.e. des particules en ruthénium, rhodium, palladium, osmium, iridium, rhénium et platine, seuls ou en mélange, ou en un de leurs alliages). A titre illustratif et non limitatif, le support peut être une céramique, par exemple issue d'un pot catalytique.

Bien que cela ne soit aucunement limitatif, l'invention trouve particulièrement des applications dans le domaine du recyclage des assemblages membrane/électrode (AME).

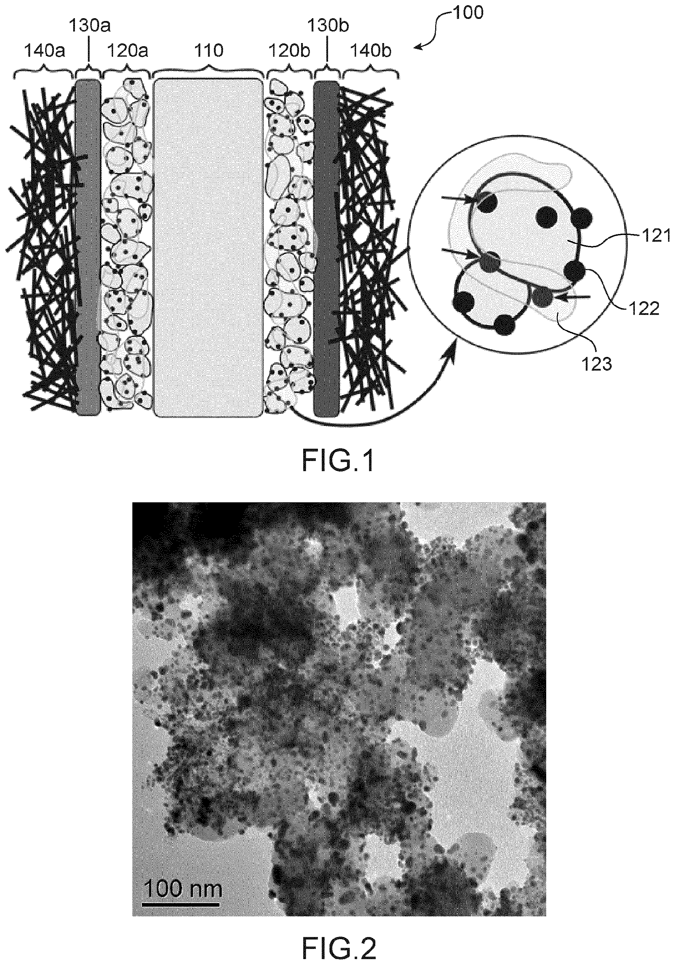

La figure 1 représente un assemblage membrane électrode 100 (AME ou MEA pour « Membrane Electrode Assembly ») d'une pile à combustible. L'AME 100, aussi appelé coeur de pile, comprend une membrane 110 recouverte de part et d'autre par une couche catalytique 120a, 120b (ou CL pour « catalyst layer »). Chaque couche catalytique 120a, 120b est elle-même recouverte par une couche microporeuse 130a, 130b (ou MPL pour « Microporous Layer »). Finalement chaque couche microporeuse est recouverte par une couche de diffusion des gaz 140a, 140b (ou GDL pour « gas diffusion layer »).

La membrane 110 est une membrane électrolytique permettant le passage sélectif des protons entre les électrodes (anode et cathode). La membrane 110 comprend, par exemple, un ionomère perfluorosulfoné (PFSA), tel que le Nafion^{®} commercialisé par la société Dupont.

Les couches catalytiques 120a, 120b sont aussi appelées couches actives ou électrodes. Chaque couche catalytique 120a, 120b comprend un support en carbone 121, des particules catalytiques 122, et éventuellement un ionomère 123.

Le support en carbone 121 est, par exemple, sous la forme d'agrégats.

Les particules catalytiques 122 sont supportées par le support en carbone 121.

Par particules, on entend des éléments de forme, par exemple, sphériques, allongées, ou ovoïdes. Elles peuvent avoir une plus grande dimension, par exemple le diamètre dans le cas de particules sphériques, allant de 2nm à 5µm, Cette taille peut être déterminée par spectroscopie à corrélation de photons.

Les particules 122 sont, avantageusement, des nanoparticules pour accélérer les réactions de dissociation de l'hydrogène à l'anode et de réduction de l'oxygène à la cathode. Elles ont une plus grande dimension allant de 1nm à 1µm, et de préférence de 1nm à 50nm, et encore plus préférentiellement de 2 nm à 5nm.

Les particules catalytiques 122 sont en platinoïde. L'élément platinoïde est choisi parmi le platine, l'iridium, le palladium, le ruthénium et l'osmium, seuls ou en mélange, ou encore un de leurs alliages. L'alliage peut contenir plusieurs (deux ou trois par exemple) des éléments atomiques précités. Par exemple, il s'agit d'un alliage de platine et de palladium. Selon une autre alternative, il peut contenir un ou plusieurs éléments atomiques précités en association avec un ou plusieurs éléments métalliques autres que des platinoïdes, notamment avec un ou plusieurs autres métaux de transition. Par exemple, il s'agit d'un alliage de platine et de cobalt.

La couche catalytique 120a, 120b peut comprendre, en outre, un ionomère 123, c'est-à-dire un polymère possédant un groupe ionisé permettant le transport de charge. Avantageusement, il est identique à celui constituant la membrane. Selon une variante de réalisation, il est différent de celui constituant la membrane.

L'AME 100 peut être fabriquée en formant la couche catalytique 120a, 120b sur la membrane 110 (CCM pour « Catalyst Coated Membrane ») ou en formant la couche catalytique 120a, 120b sur la couche de diffusion de gaz 140a, 140b (CCB pour « Catalyst Coated Backing »).

Pour extraire les particules 122 de leur support, ici la membrane 110, on sépare, dans un premier temps, la membrane 110 des autres éléments de l'AME 100, et notamment des couches de de diffusion des gaz 140a, 140b, et des couches microporeuses 130a, 130b.

Les couches catalytiques 120a, 120b peuvent rester solidaires de la membrane 110. Il est également possible de séparer la membrane 110 d'une couche catalytique ou des deux couches catalytiques 120a, 120b.

Dans une première alternative, cette étape de séparation peut être réalisée en plongeant l'AME 100 dans une solution d'eau/éthanol à 50/50 volumique de manière à provoquer un gonflement de la membrane 110 et à casser les liaisons entre la couche active 120a, 120b et la membrane 110. A l'issue de cette étape, des particules catalytiques 122 demeurent supportées par la membrane 110. La membrane 110 est ensuite immergée dans la solution liquide ionique pour extraire les particules catalytiques 122.

Selon une deuxième alternative, l'AME 100 est plongée dans la solution de liquide ionique, ce qui permet, en une étape, de séparer la membrane 110 des autres constituants de l'AME 100 et simultanément d'extraire les particules 122 supportées par la membrane 110. Avantageusement, cette alternative permet également d'extraire les particules de platinoïdes contenues dans les couches catalytiques lorsque ces dernières sont plongées dans la solution liquide ionique.

Par plongée, on entend qu'elle est au moins partiellement immergée et de préférence totalement immergée dans la solution liquide ionique.

L'immersion de la membrane 110 dans la solution génère l'extraction des particules 122 de leur support et leur mise en suspension sous forme métallique dans la solution liquide ionique.

L'étape d'extraction des particules 122 est réalisée sans étape électrochimique, c'est-à-dire sans imposer de courant (ou de tension) dans l'échantillon.

Le support contenant les particules 122 à extraire peut être fixé à un autre élément ou flotter dans la solution.

La solution liquide ionique permet de faire gonfler la membrane 110 pour faciliter l'extraction des particules 122, et de stabiliser les particules 122 tout en évitant leur dissolution.

La solution liquide ionique comprend un liquide ionique ou un mélange de liquides ioniques. Les liquides ioniques sont des solvants non-volatiles et ininflammables et chimiquement stables à des températures supérieures à 200°C. On entend par liquide ionique l'association comprenant au moins un cation et un anion qui génère un liquide avec une température de fusion inférieure à ou voisine de 100°C.

La solution contient au moins un liquide ionique dit stabilisant (ou complexant). On entend par liquide ionique stabilisant, un liquide ionique qui favorise la complexation des nanoparticules de platine et qui possède un pouvoir de complexation permettant la stabilisation des nanoparticules en solution sous la forme d'une suspension.

Lorsque la solution comporte un liquide ionique additionnel, il s'agit, avantageusement, d'un liquide ionique solvant. On entend par liquide ionique solvant, un liquide ionique qui ne permet pas la dissolution du platine et qui possède pas ou très peu de pouvoir de complexation sur le platine.

Le premier liquide ionique (liquide ionique stabilisant) est formé par un premier cation organique et un premier anion inorganique.

Le deuxième liquide ionique (liquide ionique solvant) est formé par un deuxième cation organique et un deuxième anion inorganique.

Le cation du premier liquide ionique et le cation du deuxième liquide ionique sont, avantageusement, choisis parmi les cations de la famille : imidazolium, pyrrolidinium, ammonium, pipéridinium, sulfonium et phosphonium.

Avantageusement, les premier et deuxième cations organiques peuvent être choisis parmi le groupe constitué par un tétraalkylammonium, un *N,N-*dialkylimidazolium, un *N,N*-dialkylpyrrolidinium, un tétraalkylphosphonium, un trialkylsulfonium et un *N,N*-dialkylpipéridinium.

De préférence, il s'agit d'un cation phosphonium. Ce cation est stable et favorise le gonflement du ionomère, ce qui facilite l'extraction des particules de platinoïdes de leur support.

Plus avantageusement on choisira un cation ayant des chaînes alkyles ou fluoro-alkyles en C₂-C₁₄, typiquement le cation [P66614]⁺ (trihexyltétradécylphosphonium).

De préférence, le cation du premier liquide ionique et du deuxième liquide ionique sont identiques pour augmenter la solubilité du deuxième liquide ionique dans le premier liquide ionique.

L'anion du premier liquide ionique est un anion complexant/stabilisant ou à caractère coordinant choisi, par exemple, dans la famille des halogénures (Cl⁻, Br⁻, I⁻), la famille des amines, par exemple les dicyanamides N(CN)₂⁻ notés DCA⁻ et/ou un anion possédant un ligand soufré comme les thiocyanates SCN⁻.

L'anion du deuxième liquide ionique solvant est indifféremment organique ou inorganique. Il n'a pas ou a très peu d'affinité complexante. Avantageusement, on utilisera des anions permettant d'obtenir une faible viscosité, une température de fusion basse (liquide à température ambiante) et/ou une bonne solubilité avec le premier liquide ionique. L'anion du deuxième liquide ionique, est, par exemple, choisi parmi les anions bis(trifluorométhanesulfonyl)imide (CF₃SO₂)₂N⁻ noté TFSI⁻, bis(fluorosulfonyl)imide (FSO₂)₂N⁻ noté FSI⁻, trifluorométhanesulfonate ou triflate CF₃SO₃⁻, tris(pentafluoroéthyl)trifluorophosphate noté FAP⁻ et bis(oxalato)borate noté BOB⁻. On choisira, avantageusement, l'anion TFSI.

Plus avantageusement, le mélange des liquides ioniques est liquide à température ambiante.

On choisira, par exemple, un mélange comprenant [P66614][CI] comme premier liquide ionique et [P66614][TFSI] comme deuxième liquide ionique.

Dans une variante avantageuse de l'invention, la solution peut comprendre :
- de 50 % mol à 100 %mol, et de préférence de 55%mol à 100%mol, du premier liquide ionique, et
- de 0 % mol à 50 % mol, et de préférence de 0% à 45%mol, du deuxième liquide ionique.

La concentration molaire du premier liquide ionique va, par exemple de 2mol/L à 6mol/L.

La concentration molaire du deuxième liquide ionique va, par exemple de 0mol/L à 4mol/L.

La solution liquide ionique peut, éventuellement, comprendre en outre un agent desséchant anhydre ou encore un agent favorisant le transport de matière.

L'agent desséchant anhydre est, par exemple, choisi parmi MgSO₄, Na₂SO₄, CaCl₂, CaSO₄, K₂CO₃, NaOH, KOH, et CaO.

L'agent favorisant les propriétés de transport peut être un sel ou l'association d'un troisième liquide ionique.

La solution de liquide ionique est, de préférence, agitée lors de l'étape d'extraction pour favoriser les cinétiques d'extraction.

Après la mise en suspension des particules 122, la membrane 110 est extraite du bain et les particules 122 peuvent être séparées de la solution par des techniques conventionnelles de séparation liquide/solide comme, par exemple, par centrifugation, ultrafiltration (techniques membranaire), ou filtration. La solution liquide ionique est réutilisable pour procéder à un nouveau cycle de traitement.

Le procédé d'extraction précédemment décrit est particulièrement intéressant pour recycler les piles à combustible, notamment du type PEMFC. Le procédé de recyclage de telles piles comprend une étape au cours de laquelle on sépare, les plaques bipolaires des différentes AME, par exemple par une opération manuelle. L'AME est ensuite valorisée selon le procédé précédemment décrit. Les plaques bipolaires peuvent être également, avantageusement, valorisées.

### Exemples illustratifs et non limitatifs d'un mode de réalisation :

Dans cet exemple, on recycle une AME 100 de type CCM, i.e. fabriquée avec un procédé au cours duquel le catalyseur est déposé sur la membrane 110 (« Catalyst Coated Membrane »). La figure 2 est un cliché obtenu au microscope électronique en transmission (MET) du catalyseur déposé sur une électrode pristine (ou électrode vierge correspondant à l'électrode neuve).

Dans un premier temps, on sépare la membrane échangeuse de protons et la couche catalytique de la couche microporeuse.

Le procédé de recyclage est réalisé sur un échantillon d'une surface de 1cm².

La composition de l'échantillon est répertoriée dans le tableau I suivant :

| Pt | Nation | C | Chargement en Pt | Taille des NPs |
|---|---|---|---|---|
| 34% | 26% | 40% | 0.19 mg_{Pt}/cm² | 3,0 ± 0,6 |

L'échantillon est composé de platine, de noir de carbone et de ionomère.

L'échantillon est placé dans un pilulier contenant 1mL une solution liquide ionique de trihexyltétradécylphosphonium chlorure (P66614Cl). L'échantillon est immergé dans le liquide ionique à une température de 80°C avec une agitation de 400 tour/min durant 6 heures. L'agitateur est à distance de l'échantillon.

Au cours du temps, la solution liquide ionique s'assombrit jusqu'à atteindre une couleur noire, caractérisant la mise en suspension des nanoparticules de platine.

Après traitement, l'échantillon est retiré du liquide ionique. L'analyse par MET de la solution liquide ionique indique la présence des nanoparticules de platine (figures 5A et 5B) qui sont sous forme dispersées.

Aucune décomposition du liquide ionique n'est observée par RMN après traitement. Moyennant la séparation des particules de la phase liquide, la solution liquide ionique est réutilisable pour un nouveau cycle.

## Revendications

1. Procédé de récupération de particules (122) de platinoïde contenues dans un support électriquement isolant (110), le procédé comprenant une étape d'extraction au cours de laquelle le support électriquement isolant (110) contenant les particules (122) de platinoïde est plongé dans une solution liquide ionique comprenant un premier liquide ionique, **caractérisé en ce que**
- l'anion du premier liquide ionique est choisi parmi les halogénures, les amines, les dicyanamides et les anions possédant un ligand soufré comme les thiocyanates, et
- le cation du premier liquide ionique est choisi parmi les imidazolium, pyrrolidinium, ammonium, pipéridinium, sulfonium et phosphonium, moyennant quoi les particules (122) de platinoïde du support électriquement isolant (110) sont extraites du support électriquement isolant (110).

2. Procédé selon la revendication 1, dans lequel le support (110) électriquement isolant est en un matériau polymère.

3. Procédé selon la revendication 2, dans lequel le support (110) électriquement isolant est une membrane échangeuse de protons.

4. Procédé selon l'une quelconque des revendications précédentes, **caractérisé en ce que** les particules (122) sont des nanoparticules ayant une plus grande dimension inférieure à 1µm.

5. Procédé selon l'une quelconque des revendications précédentes, dans lequel l'étape d'extraction des particules (122) de platinoïde est réalisée sous agitation.

6. Procédé selon l'une quelconque des revendications précédentes, dans lequel l'étape d'extraction est réalisée à une température allant de 20°C à 180°C, de préférence de 60 à 150°C, par exemple de 80°C.

7. Procédé selon l'une quelconque des revendications précédentes, dans lequel la durée de l'étape d'extraction va de 2 minutes à 2 jours, de préférence de 2h à 18h, par exemple 6h.

8. Procédé selon l'une quelconque des revendications précédentes, dans lequel la solution liquide ionique comprend un deuxième liquide ionique.

9. Procédé selon la revendication 8, dans lequel la solution liquide ionique comprend de 55% à 100% molaire du premier liquide ionique et de 0% à 45% du deuxième liquide ionique.

10. Procédé selon l'une quelconque des revendications précédentes, **caractérisé en ce que** le cation du premier liquide ionique est un phosphonium.

11. Procédé selon l'une quelconque des revendications 1 à 9, **caractérisé en ce que** le cation du premier liquide ionique est un tétraalkylammonium, un N,N-dialkylimidazolium, un N,N-dialkylpyrrolidinium, un tétraalkylphosphonium, un trialkylsulfonium ou un N,N-dialkylpipéridinium.

12. Procédé selon l'une quelconque des revendication précédentes, **caractérisé en ce que** le premier liquide ionique est [P66614][CI].

13. Procédé selon l'une quelconque des revendication précédentes, **caractérisé en ce que** le cation du deuxième liquide ionique est choisi parmi les cations imidazolium, pyrrolidinium, ammonium, pipéridinium, sulfonium et phosphonium et **en ce que** l'anion du deuxième liquide ionique est choisi parmi les anions bis(trifluorométhanesulfonyl)imide (CF₃SO₂)₂N⁻ , bis(fluorosulfonyl)imide (FSO₂)₂N⁻, trifluorométhanesulfonate, tris(pentafluoroéthyl)trifluorophosphate et bis(oxalato)borate.

14. Procédé selon la revendication 12, **caractérisé en ce que** le deuxième liquide ionique est [P66614][TFSI].

15. Procédé de récupération de particules (122) de platinoïde contenues dans des assemblages membrane électrodes (100) d'une pile à combustible, telle qu'une pile à combustible à membrane échangeuse de protons PEMFC, de préférence usée ou mise au rebut, ce procédé comprenant les étapes successives suivantes :
(a) une étape de séparation des assemblages membrane électrodes (100) et des plaques bipolaires de la pile à combustible,
(b) une étape de séparation de la membrane (110) et des électrodes (120a, 120b) de chaque assemblage membrane électrodes (110) séparé à l'étape (a), et
(c) une étape de récupération des particules (122) de platinoïdes contenues dans la membrane (110) par la mise en oeuvre du procédé de récupération selon l'une quelconque des revendications 1 à 14.

## Patentansprüche

1. Verfahren zur Rückgewinnung von Platinoidpartikeln (122), die in einem elektrisch isolierenden Träger (110) enthalten sind, wobei das Verfahren einen Extraktionsschritt umfasst, bei dem der elektrisch isolierende Träger (110), der die Platinoidpartikel (122) enthält, in eine ionische flüssige Lösung getaucht wird, die eine erste ionische Flüssigkeit umfasst, **dadurch gekennzeichnet, dass**
- das Anion der ersten ionischen Flüssigkeit ausgewählt ist aus Halogeniden, Aminen, Dicyanamiden und die Anionen mit einem Schwefelliganden wie Thiocyanaten, und
- das Kation der ersten ionischen Flüssigkeit ausgewählt ist aus Imidazolium, Pyrrolidinium, Ammonium, Piperidinium, Sulfonium und Phosphonium, wodurch die Platinoidpartikel (122) des elektrisch isolierenden Trägers (110) von dem elektrisch isolierenden Träger (110) extrahiert werden.

2. Verfahren nach Anspruch 1, wobei der elektrisch isolierende Träger (110) aus einem polymeren Material besteht.

3. Verfahren nach Anspruch 2, wobei der elektrisch isolierende Träger (110) eine Protonenaustauschmembran ist.

4. Verfahren nach einem der vorstehenden Ansprüche, **dadurch gekennzeichnet, dass** die Partikel (122) Nanopartikel mit einer größten Abmessung von weniger als 1 µm sind.

5. Verfahren nach einem der vorstehenden Ansprüche, wobei der Extraktionsschritt der Partikel (122) des Platinoids unter Rühren durchgeführt wird.

6. Verfahren nach einem der vorstehenden Ansprüche, wobei der Extraktionsschritt bei einer Temperatur von 20 °C bis 180 °C, vorzugsweise 60 bis 150 °C, zum Beispiel 80 °C, durchgeführt wird.

7. Verfahren nach einem der vorstehenden Ansprüche, wobei die Dauerdes Extraktionsschrittes von 2 Minuten bis 2 Tage reicht, vorzugsweise von 2 Stunden bis 18 Stunden, zum Beispiel 6 Stunden.

8. Verfahren nach einem der vorstehenden Ansprüche, wobei die ionische flüssige Lösung eine zweite ionische Flüssigkeit umfasst.

9. Verfahren nach Anspruch 8, wobei die ionische flüssige Lösung 55 % bis 100 Mol.-% der ersten ionischen Flüssigkeit und 0 % bis 45 % der zweiten ionischen Flüssigkeit umfasst.

10. Verfahren nach einem der vorstehenden Ansprüche, **dadurch gekennzeichnet, dass** das Kation der ersten ionischen Flüssigkeit ein Phosphonium ist.

11. Verfahren nach einem der Ansprüche 1 bis 9, **dadurch gekennzeichnet, dass** das Kation der ersten ionischen Flüssigkeit ein Tetraalkylammonium, ein N,N-Dialkylimidazolium, ein N,N-Dialkylpyrrolidinium, ein Tetraalkylphosphonium, ein Trialkylsulfonium oder ein N,N-Dialkylpiperidinium ist.

12. Verfahren nach einem der vorstehenden Ansprüche, **dadurch gekennzeichnet, dass** die erste ionische Flüssigkeit [P66614][CI] ist.

13. Verfahren nach einem der vorstehenden Ansprüche, **dadurch gekennzeichnet, dass** das Kation der zweiten ionischen Flüssigkeit ausgewählt ist aus den Kationen Imidazolium, Pyrrolidinium, Ammonium, Piperidinium, Sulfonium und Phosphonium und dass das Anion der zweiten ionischen Flüssigkeit ausgewählt ist aus den Anionen Bis(trifluoromethansulfonyl)imid (CF₃SO₂)₂N⁻, Bis(fluorosulfonyl)imid (FSO₂)₂N⁻, Trifluoromethansulfonat, Tris(pentafluoroethyl)trifluorophosphat und Bis(oxalato)borat.

14. Verfahren nach Anspruch 12, **dadurch gekennzeichnet, dass** die zweite ionische Flüssigkeit [P66614][TFSI] ist.

15. Verfahren zur Rückgewinnung von Platinoidpartikeln (122), die in Membranelektrodenbaugruppen {100) einer Brennstoffzelle, wie beispielsweise einer Brennstoffzelle mit Protonenaustauschmembran PEMFC, enthalten sind, die vorzugsweise verbraucht oder ausrangiert ist, wobei das Verfahren die folgenden aufeinanderfolgenden Schritte umfasst:
(a) einen Schritt des Trennens der Membranelektrodenbaugruppen (100) und der Bipolarplatten der Brennstoffzelle,
(b) einen Schritt des Trennens der Membran (110) und der Elektroden (120a, 120b) von jeder Membranelektrodenbaugruppe (110), die in Schritt (a) getrennt wurde, und
(c) einen Schritt zum Gewinnen der Platinoidpartikel (122), die in der Membran (110) enthalten sind, durch Ausführen des Gewinnungsverfahrens nach einem der Ansprüche 1 bis 14.

## Claims

1. A method for recovering platinoid particles (122) contained in an electrically insulating support (110), the method comprising an extraction step during which the electrically insulating support (110) containing the platinoid particles (122) is immersed in an ionic liquid solution comprising a first ionic liquid, **characterised in that**
- the anion of the first ionic liquid is selected from halides, amines, dicyanamides and the anions having a sulphur ligand such as thiocyanates, and
- the cation of the first ionic liquid is selected from imidazolium, pyrrolidinium, ammonium, piperidinium, sulfonium and phosphonium,
whereby the platinoid particles (122) of the electrically insulating support (110) are extracted from the electrically insulating support (110).

2. The method according to claim 1, wherein the electrically insulating support (110) is made of a polymer material.

3. The method according to claim 2, wherein the electrically insulating support (110) is a proton exchange membrane.

4. The method according to any one of the preceding claims, **characterised in that** the particles (122) are nanoparticles having a largest dimension of less than 1 µm.

5. The method according to any one of the preceding claims, wherein the step of extracting the platinoid particles (122) is carried out with stirring.

6. The method according to any one of the preceding claims, wherein the extraction step is carried out at a temperature ranging from 20°C to 180°C, preferably from 60 to 150°C, for example 80°C.

7. The method according to any one of the preceding claims, wherein the duration of the extraction step ranges from 2 minutes to 2 days, preferably from 2 h to 18 h, for example 6 h.

8. The method according to any one of the preceding claims s, wherein the ionic liquid solution comprises a second ionic liquid.

9. The method according to claim 8, wherein the ionic liquid solution comprises from 55 mole % to 100 mole % of the first ionic liquid and from 0 mole % to 45 mole % of the second ionic liquid.

10. The method according to any one of the preceding claims, **characterised in that** the cation of the first ionic liquid is a phosphonium.

11. The method according to any one of claims 1 to 9, **characterised in that** the cation of the first ionic liquid is a tetraalkylammonium, an N,N-dialkylimidazolium, an N,N-dialkylpyrrolidinium, a tetraalkylphosphonium, a trialkylsulfonium or an N,N-dialkylpiperidinium.

12. The method according to any one of the preceding claims, **characterised in that** the first ionic liquid is [P66614][CI].

13. The method according to any one of the preceding claims, **characterised in that** the cation of the second ionic liquid is selected from the imidazolium, pyrrolidinium, ammonium, piperidinium, sulfonium and phosphonium cations and **in that** the anion of the second ionic liquid is selected from the bis(trifluoromethanesulfonyl)imide (CF₃SO₂)₂N⁻, bis(fluorosulfonyl)imide (FSO₂)₂N⁻, trifluoromethanesulfonate, tris(pentafluoroethyl)trifluorophosphate and bis(oxalato)borate anions.

14. The method according to claim 12, **characterised in that** the second ionic liquid is [P66614][TFSI].

15. The method for recovering platinoid particles (122) contained in membrane electrode assemblies (100) of a fuel cell, such as a proton exchange membrane fuel cell PEMFC, preferably used or discarded, this method comprising the following successive steps:
(a) a step of separating the membrane electrode assemblies (100) and the bipolar plates of the fuel cell,
(b) a step of separating the membrane (110) and the electrodes (120a, 120b) of each membrane electrode assembly (110) separated in step (a), and
(c) a step of recovering the platinoid particles (122) contained in the membrane (110) by implementing the recovery method according to any one of claims 1 to 14.
